# EUROPEAN PATENT SPECIFICATION

(11) **EP 4 220 793 B1**
(45) Date of publication and mention of the grant of the patent: **16.07.2025**
(21) Application number: 22216480.8
(22) Date of filing: 23.12.2022
(51) Int. Cl.: H01M 10/04, H01M 10/42, H01M 50/209, H01M 50/244, H01M 50/251, H01M 50/543, H01M 50/505, H01M 50/569, H01M 50/574, H01M 50/298

(54) **BATTERY PACK INSTALLATION STRUCTURE**
BATTERIEPACK-INSTALLATIONSSTRUKTUR
STRUCTURE D'INSTALLATION DE BLOC-BATTERIE

(30) Priority: 01.02.2022 JP 2022014368
(43) Date of publication of application: 02.08.2023
(73) Proprietor: Suzuki Motor Corporation, Hamamatsu-shi, Shizuoka 432-8611 (JP)
(72) Inventor: MITSUOKA, Shigehi, Hamamatsu-shi, 432-8611 (JP); SUZUKI, Takafumi, Hamamatsu-shi, 432-8611 (JP); FURUKI, Kazushi, Hamamatsu-shi, 432-8611 (JP); HIGASHI, Naoki, Hamamatsu-shi, 432-8611 (JP); ASANO, Toru, Ikawa, 018-1512 (JP)
(74) Representative: Plasseraud IP

(56) References cited:
- CN-A- 113 782 863
- CN-U- 204 648 038
- CN-U- 204 652 727
- KR-A- 20120 093 697
- HUTT ROSAMOND: "This Dutch football stadium creates its own energy and stores it in electric car batteries | World Economic Forum", 6 July 2018 (2018-07-06), pages 1 - 13, XP093056253, Retrieved from the Internet <URL:https://www.weforum.org/agenda/2018/07/netherlands-football-johan-cruijff-stadium-electric-car-batteries/> [retrieved on 20230621]
- HUTT ROSAMOND: "This Dutch football stadium creates its own energy and stores it in electric car batteries | World Economic Forum", 6 July 2018 (2018-07-06), pages 1 - 13, XP093056253, Retrieved from the Internet <URL:https://www.weforum.org/agenda/2018/07/netherlands-football-johan-cruijff-stadium-electric-car-batteries/> [retrieved on 20230621]

## Description

### [Technical Field]

The present invention relates to a battery pack installation structure, and more particularly, to a battery pack installation structure of a solar streetlight.

### [Background Art]

In recent years, efforts have been made to reuse battery packs that had been mounted on a vehicle. Since there is a problem that such efforts are unprofitable when the battery pack is dismantled into cells and modules, the battery pack is reused as it is.

However, a battery pack using small lithium ion batteries has a small battery capacity, and therefore cannot be used as it is for household power. Against this background, one reuse application of a battery pack using small lithium ion batteries is a streetlight electric storage device. Further, the streetlight may be a solar-type streetlight (hereinafter referred to as a "solar streetlight").

Performance such as capacity and internal resistance of a battery pack collected from the market is deteriorated as compared to a new battery pack, and performance varies among battery packs. In consideration of such circumstances, it is necessary to increase the capacity by combining a plurality of battery packs when reusing battery packs.

JP2002-270381A describes a streetlight including: a power supply unit that has a solar cell and a secondary battery charged by direct current generated by the solar cell; a brightness detection circuit that detects brightness of the outside; a diode unit that has a light emission surface formed by arranging a plurality of light-emitting diodes; a switching element connected between the secondary battery and the diode unit; and a switching control circuit that controls switching of the switching element, in which when brightness of the outside is detected by the brightness detection circuit, the switching control circuit controls the switching element to a switching-ON state, and causes the power supply unit to supply electricity to the diode unit. The streetlight described in JP2002-270381A includes a supporting column, and stores the secondary battery, a charging circuit, and a control unit inside the supporting column.

### [Citation List]

### [Patent Literature]

[Patent Literature 1] JP2002-270381A

### [Summary of Invention]

### [Technical Problem]

Incidentally, when a reused battery pack is used for the streetlight as described in JP2002-270381A, there is the following problem.

When the battery pack to be used is a reused battery pack, since the dimension and structure of the battery pack are predetermined, it is difficult to install such a battery pack with the constraints in a narrow column such as a streetlight, or to replace the battery pack installed in the column.

JP2002-270381A does not include a specific description about a structure for arranging a plurality of battery packs inside the supporting column of the streetlight. Hence, the streetlight described in JP2002-270381A does not give consideration regarding installation of a plurality of reused battery packs inside the supporting column or replacement of battery packs installed inside the supporting column.

The present invention has been made in view of the foregoing, and aims to provide a battery pack installation structure (of a solar streetlight) that increases working efficiency for installation and replacement of battery packs in a structure for installing a plurality of battery packs inside a columnar member.

### [Solution to Problem]

**In** order to achieve the above object, the present invention defines a solar streetlight according to independent claim 1.

### [Advantageous Effect of Invention]

According to the present invention, it is possible to provide a battery pack installation structure (of a solar streetlight) that increases working efficiency for installation and replacement of battery packs in a structure for installing a plurality of battery packs inside a columnar member.

### [Brief Description of Drawings]

[Figure 1] Figure 1 is a schematic configuration diagram of a solar streetlight according to an example of the present invention, where (a) is a front view and (b) is a left side view.
[Figure 2] Figure 2 is a right side view of a battery pack of the solar streetlight according to the example of the present invention.
[Figure 3] Figure 3 is a rear view of the battery pack of the solar streetlight according to the example of the present invention.
[Figure 4] Figure 4 is a front view of the battery pack of the solar streetlight according to the example of the present invention.
[Figure 5] Figure 5 is a schematic configuration diagram of the battery pack of the solar streetlight according to the example of the present invention.

### [Description of Embodiment]

A battery pack installation structure according to an embodiment of the present invention is a battery pack installation structure for installing, inside a columnar member, a battery pack capable of supplying electricity to a predetermined load, characterized in that the battery pack is formed in a rectangular parallelepiped shape in which a side in a vertical direction is shorter than a side in a horizontal direction when placed in a transverse direction, and a plurality of the battery packs placed in the vertical direction are arranged to align in an up-down direction inside the columnar member. With this configuration, the battery pack installation structure according to the embodiment of the present invention can increase working efficiency for installation and replacement of battery packs in a structure for installing a plurality of battery packs inside a columnar member.

### [Example]

Hereinafter, a battery pack installation structure according to an example of the present invention will be described with reference to the drawings.

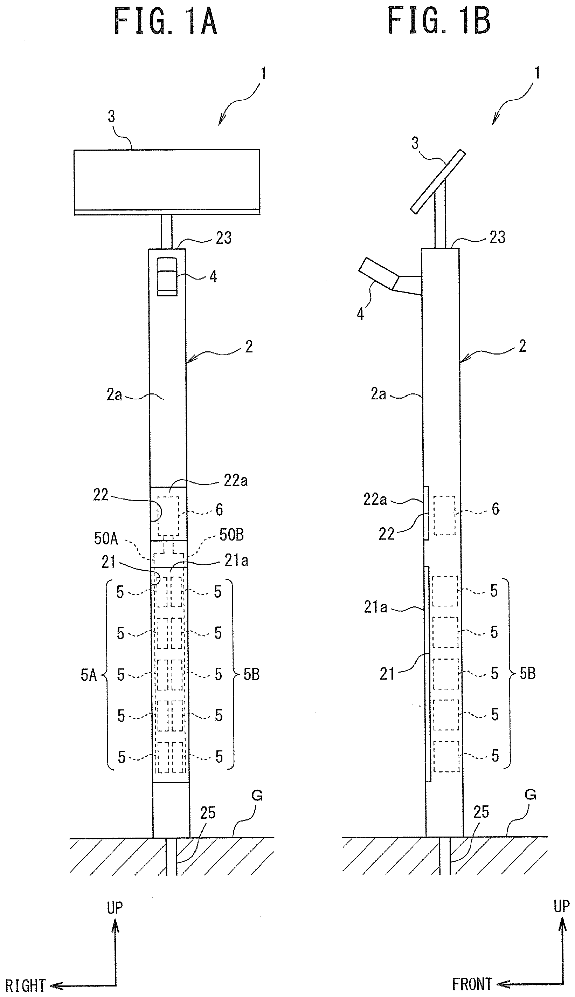

As illustrated in Figure 1, the present example describes a case of a battery pack installation structure of a solar streetlight installed outside.

### (Configuration of solar streetlight)

A solar streetlight 1 includes a columnar member 2, a solar panel 3, an illumination device 4 as a predetermined load, a plurality of battery packs 5, and a control device 6. The solar streetlight 1 is installed on a ground G.

Hereinafter, based on the columnar member 2, the illumination device 4 side is defined as "front," the opposite side thereof is defined as "back," when viewing the front side from the back side, the left side is defined as "left," the right side is defined as "right," and the upper side is defined as "up." Of the side surfaces of the columnar member 2, a side surface on which the illumination device 4 is installed is the front side of the solar streetlight 1.

The columnar member 2 is formed of a square pole, and is formed in a hollow shape having a space on the inside. The columnar member 2 can also adopt shapes other than the square pole, such as a prism or a cylinder. As will be described later, a plurality of battery packs 5 capable of supplying electricity to the illumination device 4 and the control device 6 are installed inside the columnar member 2.

The control device 6 is disposed above the plurality of battery packs 5 inside the columnar member 2. A first opening 21 and a second opening 22 located above the first opening 21 are formed on a side surface 2a on the front side of the columnar member 2.

The first opening 21 is provided in the installation position of the plurality of battery packs 5. The first opening 21 is used when performing work such as replacing the battery pack 5 and performing maintenance, for example, and is closed by a lid 21a when the work is not performed.

The second opening 22 is provided in the installation position of the control device 6. The second opening 22 is used when operating the control device 6 or performing maintenance work, for example, and is closed by a lid 22a when the operation and work are not performed.

In the present example, the installation area of the plurality of battery packs 5 inside the columnar member 2 is longer than the installation area of the control device 6 in the height direction of the columnar member 2, and therefore the first opening 21 is longer than the second opening 22 in the height direction.

A drainpipe 25 embedded below the ground G is connected to a bottom part of the columnar member 2. The drainpipe 25 is a pipe for draining moist that pools in the bottom part of the columnar member 2 to the underground as wastewater.

The solar panel 3 is attached to a top 23 of the columnar member 2. The solar panel 3 is formed of a photovoltaic module that generates electricity using optical energy from the sun, and is adjusted according to the installation location of the solar streetlight 1, so that the solar panel 3 is oriented to obtain the maximum amount of solar radiation throughout the year. The solar panel 3 is connected to the battery pack 5 and the control device 6 to be able to supply electricity thereto.

The illumination device 4 is disposed in an upper part of the side surface 2a on the front side of the columnar member 2, and shines a downward light from an upper part of the columnar member 2.

The battery pack 5 is a reused vehicle battery pack that had been mounted on a vehicle. In the present example, in order to reuse battery packs with a small capacity used in hybrid vehicles, a plurality of battery packs 5 are combined to increase the capacity for use.

In the case of reused battery packs 5, performance varies due to different capacities and degrees of deterioration in internal resistance and the like depending on the usage history. Since the remaining life differs among the plurality of combined battery packs 5, there is a high possibility that the battery pack 5 will need to be replaced during use. In the present example, by arranging the plurality of battery packs 5 inside the columnar member 2 as described above, even when an anomaly occurs in some battery packs 5, operation as a streetlight can be assured by the remaining battery packs 5.

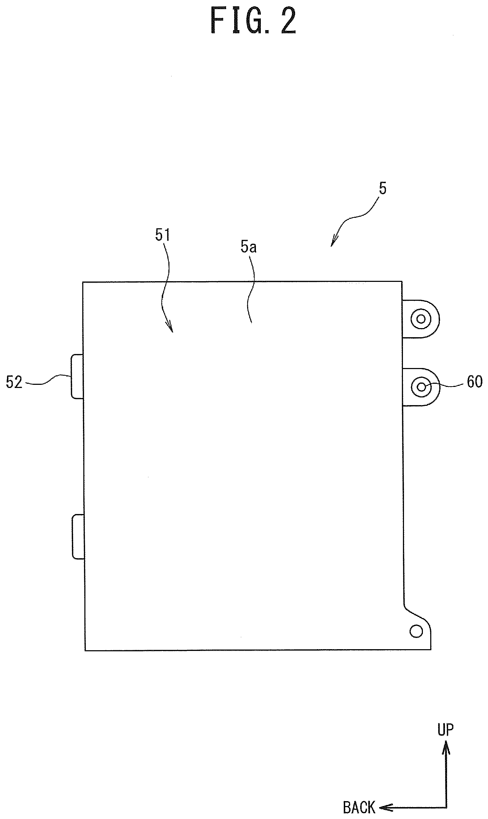

Figures 2 to 4 illustrate the battery pack 5 of the present example. Directions indicated by arrows in Figures 2 to 4 indicate directions in a state where the battery pack 5 is mounted on the columnar member 2.

As illustrated in Figures 2 to 4, the battery pack 5 is formed in a rectangular parallelepiped shape in which a side in the vertical direction is shorter than a side in the horizontal direction when placed in the transverse direction. "Placed in the transverse direction" refers to how the battery pack 5 is placed when mounted on a vehicle, and is how the battery pack 5 is placed so that its thickness is minimized. For example, "placed in the transverse direction" is a way of placement in which a right side surface of the battery pack 5 when mounted on the columnar member 2 in Figure 2 becomes a top surface.

In the present example, the battery pack 5 is mounted so as to be placed in the vertical direction inside the columnar member 2. Moreover, in the present example, as illustrated in Figure 1, the vertically placed plurality of battery packs 5 are arranged to align in the up-down direction inside the columnar member 2.

The plurality of battery packs 5 arranged in the up-down direction inside the columnar member 2 form a battery pack group. In the present example, five battery packs 5 arranged in the up-down direction form one battery pack group. The number of battery packs 5 included in a battery pack group is arbitrary, and is not limited to five.

Moreover, in the present example, two rows of the battery pack groups are provided inside the columnar member 2. Of the two rows of battery pack groups, one is referred to as a battery pack group 5A, and the other is referred to as a battery pack group 5B. The number of rows of the battery pack groups provided inside the columnar member 2 is not limited to two, and may be one, or three or more, for example.

The battery packs 5 of the same battery pack group are connected to the same wiring. Specifically, the five battery packs 5 included in the battery pack group 5A are connected to wiring 50A, and the five battery packs 5 included in the battery pack group 5B are connected to wiring 50B.

The wiring 50A and the wiring 50B are routed in the up-down direction inside the columnar member 2.

A positive terminal 60 and a power supply terminal 63 described later of each battery pack 5, the solar panel 3, the illumination device 4, the control device 6, and the like of the corresponding battery pack group are connected to each of the wiring 50A and the wiring 50B.

The battery pack group 5A and the battery pack group 5B form different battery pack group systems, and can function independently. For this reason, even when a trouble occurs in one system, the battery pack can be operated by the other system in which no trouble has occurred.

As illustrated in Figures 2 to 4, the battery pack 5 has a resin first case 51 that forms the exterior of a right side surface 5a as one side surface when placed in the vertical direction, and a metal second case 52 that forms the exterior of a left side surface 5b as the other side surface on the opposite side of the right side surface 5a. In the present example, the first case 51 covers the second case 52.

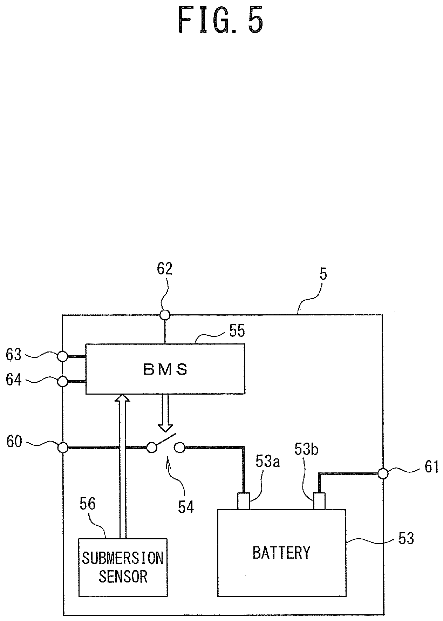

As illustrated in Figure 1, the control device 6 is connected to a battery management system (BMS) 55 (see Figure 5) described later in the battery pack 5, and controls the plurality of battery packs 5 via the BMS 55. The control device 6 exchanges information with the BMS 55 through communication.

The control device 6 is formed of a computer unit including a central processing unit (CPU), a random access memory (RAM), a read only memory (ROM), an input port, and an output port. A program for causing the computer unit to function as the control device 6 is stored, together with various constants and the like, in the ROM of the computer unit. That is, the CPU executing the program stored in the ROM by using the RAM as a work area causes the computer unit to function as the control device 6 of the present example.

Various sensors not illustrated are connected to the control device 6. For example, sensors capable of detecting a change in the external environment such as an illumination sensor are connected to the control device 6. The control device 6 may include a timer that manages the lighting duration and lighting time.

### (Electric configuration of battery pack)

Next, the electric configuration of the battery pack 5 of the present example will be described with reference to Figure 5.

As illustrated in Figure 5, the battery pack 5 includes a battery 53, a relay 54, a BMS 55, and a submersion sensor 56. The battery 53, the relay 54, the BMS 55, and the submersion sensor 56 are provided inside the battery pack 5. In other words, the battery 53, the relay 54, the BMS 55, and the submersion sensor 56 are accommodated in a space closed by the first case 51 and the second case 52.

The battery 53 is formed of a chargeable and dischargeable secondary battery such as a lithium ion battery. The battery 53 has a positive electrode 53a and a negative electrode 53b.

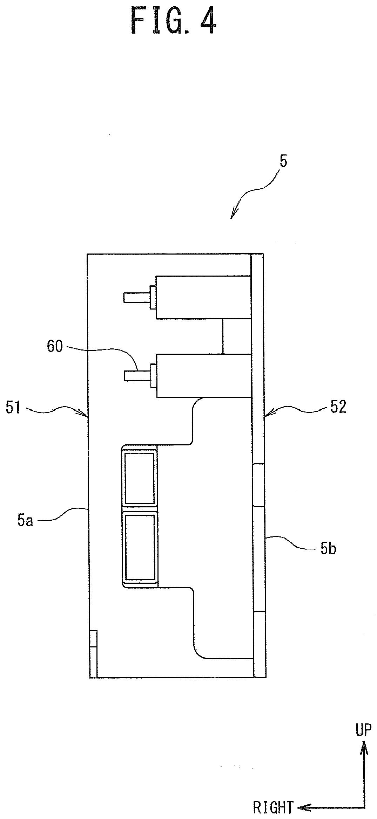

The positive electrode 53a of the battery 53 is connected to the positive terminal 60 via the relay 54 so as to be electrically conductive. The positive terminal 60 is a terminal that outputs the voltage of the battery 53 to the outside of the battery pack 5, and is exposed to the outside of the battery pack 5 (see Figure 2 and Figure 4). The negative electrode 53b of the battery 53 is connected to the second case 52 via a ground terminal 61.

The relay 54 is a switch that is provided between the positive electrode 53a of the battery 53 and the positive terminal 60, and is capable of switching between a connected state in which the positive electrode 53a of the battery 53 and the positive terminal 60 are connected and a disconnected state in which the two are disconnected.

The relay 54 is switched to the disconnected state when submersion of the battery pack 5 is detected by the submersion sensor 56.

The BMS 55 monitors and manages states of the battery 53 such as the voltage value and the state of charge (SOC) of the battery 53. The BMS 55 calculates the SOC on the basis of the charging and discharging current of the battery 53. The BMS 55 controls switching between the connected state and disconnected state of the relay 54.

The BMS 55 is connected to the control device 6 through a communication terminal 62 provided in the battery pack 5. The BMS 55 is connected to the power supply via the power supply terminal 63 and a power supply GND terminal 64 provided in the battery pack 5. In the present example, the battery 53 and the solar panel 3 are used as the power supply.

The submersion sensor 56 is a sensor that detects submersion of the battery pack 5. Various submersion sensors such as a sensor that detects submersion by sensing hydraulic pressure of a predetermined pressure or greater indicating submersion, a sensor that detects submersion when positive and negative terminals are submerged in water and there is continuity between the terminals, or the like can be used as the submersion sensor 56.

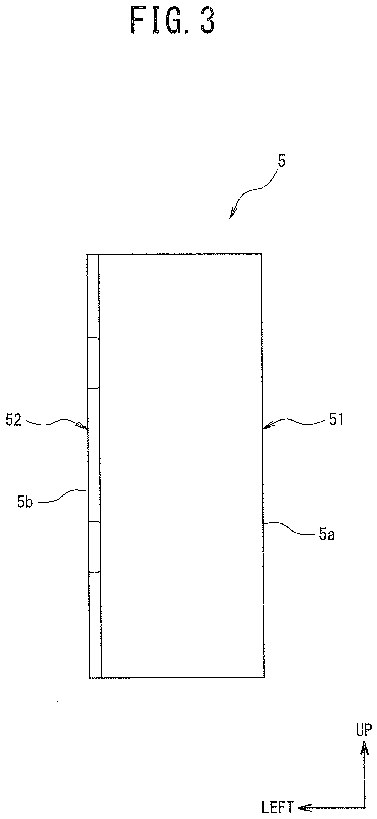

Here, the battery pack 5 is installed in the vertical direction inside the columnar member 2 to be oriented so that the positive terminal 60 is located above the submersion sensor 56. In the present example, by installing the battery pack 5 in the orientation illustrated in Figures 2 and 3 inside the columnar member 2, the positive terminal 60 is located above the submersion sensor 56.

As described above, in the battery pack installation structure according to the present example, since the vertically placed plurality of battery packs 5 are arranged to align in the up-down direction inside the columnar member 2 in the solar streetlight 1, working efficiency for installation and replacement of the battery packs 5 can be increased even when the horizontal dimension inside the columnar member 2 is small.

Here, in a case where the battery pack is installed by being placed in the transverse direction inside the columnar member that has a small horizontal dimension, the battery pack is inserted into the columnar member obliquely and then the battery pack is placed in the transverse direction. Hence, the working efficiency is low.

In addition, in the case of reused battery packs, since the remaining life differs among the plurality of combined battery packs, there is a high possibility that the battery pack will need to be replaced during use. In a case where the battery pack is placed in the transverse direction, when removing the battery pack from inside the columnar member, the battery pack needs to be pulled out of the columnar member obliquely, or the battery packs need to be sequentially removed from the top. Hence, the working efficiency is low.

In the battery pack installation structure according to the present example, since the battery pack 5 is installed by being placed in the vertical direction inside the columnar member 2 as described above, the trouble of installation work and replacement work as in the case of placing the battery pack in the transverse direction is eliminated, and the battery pack 5 can be installed and replaced easily.

In addition, in the battery pack installation structure according to the present example, since the plurality of battery packs 5 formed in a rectangular parallelepiped shape in which a side in the vertical direction is shorter than a side in the horizontal direction when placed in the transverse direction are placed in the vertical direction and installed to align in the up-down direction inside the columnar member 2, an air passage in the up-down direction can be ensured inside the columnar member 2 even when there is little clearance between an inner wall of the columnar member 2 and the battery packs 5. Consequently, the battery pack 5 can be prevented from being high temperature.

In addition, in a columnar member installed outside as in the case of the solar streetlight 1 of the present example, an upper part gets hotter than a lower part due to solar irradiation. For this reason, when a battery pack is installed in the transverse direction inside the columnar member that has a small horizontal dimension, convection of air is interrupted, and the state in which the upper part of the columnar member is hotter than the lower part thereof is left unaddressed for a long period of time. The battery formed of a lithium ion battery or the like inside the battery pack deteriorates more at a higher temperature, and therefore a battery pack in the upper part of the columnar member left in the hot state for a long period of time deteriorates more rapidly.

In the battery pack installation structure according to the present example, since the battery pack 5 is installed inside the columnar member 2 by being placed in the vertical direction as described above, a gap can be formed between the inner wall of the columnar member 2 and the battery pack 5. As a result, an air passage is formed in the up-down direction inside the columnar member 2 that has a small horizontal dimension, and the air inside the columnar member 2 can be homogenized. As a result, the deterioration of the battery pack 5 is also levelized, and the time period before performing maintenance can be elongated.

In addition, in the battery pack installation structure according to the present example, a plurality of rows (two rows of battery pack groups 5A and 5B in present example) of battery pack groups formed by a plurality of battery packs 5 arranged to align in the up-down direction are provided, so that a clearance can be ensured between the inner wall of the columnar member 2 and the battery pack 5 and the number of battery packs 5 to be installed can be increased.

In the battery pack installation structure according to the present example, even when a plurality of battery pack groups are provided, since each battery pack 5 is placed in the vertical direction, a gap can be formed between the battery packs 5 of adjacent battery pack groups. As a result, an air passage is formed in the up-down direction between adjacent battery pack groups inside the columnar member 2 that has a small horizontal dimension, and the air inside the columnar member 2 can be homogenized. As a result, deterioration of the battery packs 5 is also levelized, and the time period before performing maintenance can be elongated.

In addition, in a case where the battery pack 5 according to the present example is placed in the transverse direction like a vehicle-mounted state, for example, the first case 51 covers the second case 52 from above. If the battery pack 5 is installed by being placed in the transverse direction inside the columnar member 2, dew condensation water may pool inside the second case 52 through a gap formed between the first case 51 and the second case 52, for example.

In the battery pack installation structure according to the present example, since the battery pack 5 is installed by being placed in the vertical direction inside the columnar member 2 as described above, dew condensation water can drop down through a gap formed between the first case 51 and the second case 52. For this reason, dew condensation water does not pool inside the first case 51 or the second case 52 of the battery pack 5, and malfunction of the battery pack 5 due to dew condensation water can be prevented.

**In** the battery pack installation structure according to the present example, the control device 6 is disposed above the plurality of battery packs 5, and the battery packs 5 are installed to be oriented so that the positive electrode 53a of the battery 53 is located above the submersion sensor 56. Furthermore, the relay 54 can be switched to the disconnected state when submersion of the battery pack 5 is detected by the submersion sensor 56.

With this configuration, even when some battery packs 5 are submerged in water, the remaining battery packs 5 can be operated.

In the battery pack installation structure according to the present example, the first opening 21 and the second opening 22 located above the first opening 21 are formed on a side surface of the columnar member 2, the first opening 21 is provided in the installation position of the battery pack 5, and the second opening 22 is provided in the installation position of the control device 6.

With this configuration, installation and replacement of the battery pack 5 disposed in a lower part of the columnar member 2 can be prevented from becoming a high-place work. In addition, the area of the opening formed in the columnar member 2 can be reduced, so that the strength of the columnar member 2 can be increased. Furthermore, since the area of the side surface of the columnar member 2 can be increased, thermal deformation can be curbed when plating the columnar member 2.

### [Reference Signs List]

- 1: solar streetlight
- 2: columnar member
- 2a: side surface
- 3: solar panel
- 4: illumination device (predetermined load)
- 5: battery pack
- 5a: right side surface (one side surface)
- 5b: left side surface (the other side surface)
- 5A, 5B: battery pack group
- 6: control device
- 21: first opening
- 22: second opening
- 23: top
- 25: drainpipe
- 50A, 50B: wiring
- 51: first case
- 52: second case
- 53: battery
- 53a: positive electrode
- 53b: negative electrode
- 54: relay
- 55: BMS
- 56: submersion sensor
- 60: positive terminal
- 61: ground terminal
- G: ground

## Claims

1. A solar streetlight including a columnar member (2) and a battery pack (5) capable of supplying electricity to a predetermined load (4), **characterized in that**
the battery pack (5) is a reused vehicle battery pack and is formed in a rectangular parallelepiped shape in which a side in a vertical direction is shorter than a side in a horizontal direction when placed in a transverse direction, and
a plurality of the battery packs (5) placed in the vertical direction are arranged to align in an up-down direction inside the columnar member (2),
wherein
assuming that the plurality of the battery packs (5) arranged to align in the up-down direction are a battery pack group (5A, 5B), a plurality of rows of the battery pack groups (5A, 5B) are provided inside the columnar member (2);
the battery packs (5) of the same battery pack group (5A, 5B) are each connected to a single wiring (50A, 50B); and
the wiring (50A, 50B) is routed in the up-down direction for each of the battery pack groups (5A, 5B).

2. The solar streetlight as claimed in claim 1, wherein
the battery pack (5) has a first case (51) that forms an exterior of one side surface (5a) when placed in the vertical direction, and a second case (52) that forms an exterior of another side surface (5b) on the opposite side of the one side surface (5a).

3. The solar streetlight as claimed in claim 1 or claim 2, wherein
a control device (6) that controls the battery pack (5) is disposed above the plurality of the battery packs (5) inside the columnar member (2);
a battery (53), a relay (54), and a submersion sensor (56) are provided inside the battery pack (5);
a positive terminal (60) that outputs a voltage of the battery (53) to the outside of the battery pack (5) is provided in the battery pack (5);
a positive electrode (53a) of the battery (53) and the positive terminal (60) are connected via the relay (54) so as to be electrically conductive;
the battery pack (5) is installed to be oriented so that the positive terminal (60) is located above the submersion sensor (56) when placed in the vertical direction; and
the relay (54) is switched to a disconnected state when submersion is detected by the submersion sensor (56).

4. The solar streetlight as claimed in claim 3, wherein
a first opening (21) and a second opening (22) located above the first opening (21) are formed in a side surface (2a) of the columnar member (2);
the first opening (21) is provided in an installation position of the battery pack (5); and
the second opening (22) is provided in an installation position of the control device (6).

5. The solar streetlight as claimed in any one of claims 1 to 4, wherein
the predetermined load (4) is an illumination device.

## Patentansprüche

1. Solarstraßenlicht, welche ein säulenförmiges Element (2) und einen Batteriepack (5) umfasst, welcher dazu in der Lage ist, einen vorbestimmten Verbraucher (4) mit Elektrizität zu versorgen, **dadurch gekennzeichnet, dass**
der Batteriepack (5) ein wiederverwendeter Fahrzeugbatteriepack ist und in einer rechteckigen Parallelepipedform gebildet ist, bei welcher eine Seite in einer vertikalen Richtung kürzer als eine Seite in einer horizontalen Richtung ist, wenn er in einer transversalen Richtung platziert ist, und
eine Mehrzahl der Batteriepacks (5), welche in der vertikalen Richtung platziert sind, derart angeordnet ist, dass sie innerhalb des säulenförmigen Elements (2) in einer Oben-Unten-Richtung ausgerichtet ist,
wobei,
unter der Annahme, dass die Mehrzahl der Batteriepacks (5), welche derart angeordnet sind, dass sie in der Oben-Unten-Richtung ausgerichtet sind, eine Batteriepackgruppe (5A, 5B) sind, eine Mehrzahl von Reihen der Batteriepackgruppen (5A, 5B) innerhalb des säulenförmigen Elements (2) bereitgestellt ist;
die Batteriepacks (5) der gleichen Batteriepackgruppe (5A, 5B) jeweils mit einer einzelnen Verdrahtung (50A, 50B) verbunden sind; und
die Verdrahtung (50A, 50B) für jede der Batteriepackgruppen (5A, 5B) in der Oben-Unten-Richtung verlegt ist.

2. Solarstraßenlicht nach Anspruch 1, wobei
der Batteriepack (5) ein erstes Gehäuse (51), welches ein Äußeres einer Seitenfläche (5a) bildet, wenn er in der vertikalen Richtung platziert ist, und ein zweites Gehäuse (52) aufweist, welches ein Äußeres einer anderen Seitenfläche (5b) an der entgegengesetzten Seite der einen Seitenfläche (5a) bildet.

3. Solarstraßenlicht nach Anspruch 1 oder Anspruch 2, wobei
eine Steuervorrichtung (6), welche den Batteriepack (5) steuert, innerhalb des säulenförmigen Elements (2) oberhalb der Mehrzahl der Batteriepacks (5) angeordnet ist;
eine Batterie (53), ein Relais (54) und ein Tauchsensor (56) innerhalb des Batteriepacks (5) bereitgestellt sind;
ein positiver Anschluss (60), welcher eine Spannung der Batterie (53) an das Äußere des Batteriepacks (5) ausgibt, in dem Batteriepack (5) bereitgestellt ist;
eine positive Elektrode (53a) der Batterie (53) und der positive Anschluss (60) über das Relais (54) derart verbunden sind, dass sie elektrisch leitfähig sind;
der Batteriepack (5) derart installiert ist, dass er derart ausgerichtet ist, dass der positive Anschluss (60) oberhalb des Tauchsensors (56) angeordnet ist, wenn er in der vertikalen Richtung platziert ist; und
das Relais (54) in einen getrennten Zustand geschaltet wird, wenn durch den Tauchsensor (56) ein Untertauchen detektiert wird.

4. Solarstraßenlicht nach Anspruch 3, wobei
eine erste Öffnung (21) und eine zweite Öffnung (22), welche oberhalb der ersten Öffnung (21) angeordnet ist, in einer Seitenfläche (2a) des säulenförmigen Elements (2) gebildet sind;
die erste Öffnung (21) in einer Installationsposition des Batteriepacks (5) bereitgestellt ist; und
die zweite Öffnung (22) in einer Installationsposition der Steuervorrichtung (6) bereitgestellt ist.

5. Solarstraßenlicht nach einem der Ansprüche 1 bis 4, wobei der vorbestimmte Verbraucher (4) eine Beleuchtungsvorrichtung ist.

## Revendications

1. Lampadaire solaire comportant un élément en colonne (2) et un bloc-batterie (5) apte à fournir de l'électricité à une charge prédéterminée (4), **caractérisé en ce que**
le bloc-batterie (5) est un bloc-batterie de véhicule réutilisé et est formé en une forme rectangulaire parallélépipédique dans laquelle un côté dans une direction verticale est plus court qu'un côté dans une direction horizontale lorsqu'il est placé dans une direction transversale, et
une pluralité de blocs-batteries (5) placés dans la direction verticale sont agencés pour s'aligner dans une direction de haut en bas à l'intérieur de l'élément en colonne (2),
dans lequel
en supposant que la pluralité des blocs-batteries (5) agencés pour s'aligner dans la direction de haut en bas sont un groupe de blocs-batteries (5A, 5B), une pluralité de rangées des groupes de blocs-batteries (5A, 5B) sont prévues à l'intérieur de l'élément en colonne (2) ;
les blocs-batteries (5) du même groupe de blocs-batteries (5A, 5B) sont chacun connectés à un seul câblage (50A, 50B) ; et
le câblage (50A, 50B) est acheminé dans la direction de haut en bas pour chacun des groupes de blocs-batteries (5A, 5B).

2. Lampadaire solaire selon la revendication 1, dans lequel
le bloc-batterie (5) présente un premier boîtier (51) qui forme un extérieur d'une surface latérale (5a) lorsqu'il est placé dans la direction verticale, et un second boîtier (52) qui forme un extérieur d'une autre surface latérale (5b) sur le côté opposé de l'une surface latérale (5a).

3. Lampadaire solaire selon la revendication 1 ou la revendication 2, dans lequel
un dispositif de commande (6) qui commande le bloc-batterie (5) est disposé au-dessus de la pluralité de blocs-batteries (5) à l'intérieur de l'élément en colonne (2) ;
une batterie (53), un relais (54) et un capteur d'immersion (56) sont prévus à l'intérieur du bloc-batterie (5) ;
une borne positive (60) qui délivre une tension de la batterie (53) à l'extérieur du bloc-batterie (5) est prévue dans le bloc-batterie (5) ;
une électrode positive (53a) de la batterie (53) et la borne positive (60) sont connectées par le biais du relais (54) de manière à être électriquement conductrices ;
le bloc-batterie (5) est installé pour être orienté de sorte que la borne positive (60) soit située au-dessus du capteur d'immersion (56) lorsqu'il est placé dans la direction verticale ; et
le relais (54) est commuté vers un état déconnecté lorsque l'immersion est détectée par le capteur d'immersion (56).

4. Lampadaire solaire selon la revendication 3, dans lequel
une première ouverture (21) et une seconde ouverture (22) situées au-dessus de la première ouverture (21) sont formées dans une surface latérale (2a) de l'élément en colonne (2) ;
la première ouverture (21) est prévue dans une position d'installation du bloc-batterie (5) ; et
la seconde ouverture (22) est prévue dans une position d'installation du dispositif de commande (6).

5. Lampadaire solaire selon l'une quelconque des revendications 1 à 4, dans lequel la charge prédéterminée (4) est un dispositif d'éclairage.
